# EUROPEAN PATENT APPLICATION

(11) **EP 4 512 508 A1**
(43) Date of publication of application: **26.02.2025**
(21) Application number: 23791543.4
(22) Date of filing: 02.03.2023
(51) Int. Cl.: B01D 53/06, C01B 32/50, B01J 20/22

(54) **ADSORPTION ROTOR AND ADSORPTION ROTOR ACCOMMODATION DEVICE**

(30) Priority: 18.04.2022 JP 2022068022
(71) Applicant: Kabushikigaisya Seibu-Giken, Koga-City, Fukuoka 811-3134 (JP)
(72) Inventor: YOSHIDA, Kazuyuki, Koga-City, Fukuoka 811-3134 (JP); TOU, Akihiro, Koga-City, Fukuoka 811-3134 (JP); MAMITSUKA, Rina, Koga-City, Fukuoka 811-3134 (JP)
(74) Representative: TBK
(86) International application number: PCT/JP2023/007743
(87) International publication number: WO 2023/203888

(57) **Abstract**

[Task] To provide an adsorption rotor and an adsorption rotor accommodation device (cassette) which can attach/detach only an adsorption rotor whose performance declines, even when the performance of the adsorption rotor declines.

[Means for Resolution] A major object is to provide a cassette which can attach/detach an adsorption rotor in a short time with a relatively simple structure. When deterioration or performance decline occurs in an adsorption rotor element, a plurality of adsorption rotors are stacked in a width direction so that only the adsorption rotor in which the deterioration or the performance decline occurs can be attached/detached.

## Description

### [Technical Field]

The present invention relates to an adsorption rotor and an adsorption rotor accommodation device (hereinafter, referred to as a "cassette") which can attach/detach only a declined portion when performance of the adsorption rotor declines.

### [Background Art]

Some adsorption rotors use hydrophobic zeolite or activated carbon to adsorb and concentrate a volatile organic compound (hereinafter, referred to as VOC), use hydrophilic zeolite or silica gel to create dry air by adsorbing moisture in air, or use an ion exchange resin or an amine-supported solid absorbent to adsorb and concentrate carbon dioxide in air.

In the adsorption rotors for adsorbing and concentrating the VOC, those which use the activated carbon or use the hydrophobic zeolite as an adsorbent are known. In these adsorption rotors, the adsorption rotors using the hydrophobic zeolite are nonflammable, and have an advantage in that a major accident may not be caused even when the adsorbed VOC ignites for some reasons.

In addition, both the hydrophilic zeolite and the hydrophobic zeolite generally have heat resistance of 300°C (Celsius) or higher (hereinafter, all temperatures are indicated by "Celsius"). When the VOC having a high boiling point is adsorbed for some reasons, the adsorbed VOC can be almost completely desorbed by causing desorbed air to flow at a temperature of 300°C or higher.

When a rotor surface becomes clogged with dust since the above-described adsorption rotor is operated for a long time, or when foreign substances adhere to the rotor surface to cause deterioration or performance decline in a rotor element since paint mist is changed from a gas phase to a liquid phase due to a fallen temperature, it is necessary to replace the adsorption rotor with a new adsorption rotor. When an integrated type rotor provided at relatively low initial manufacturing costs has no space for replacement, the rotor is forcibly disassembled, and is replaced with a new rotor. Consequently, replacement effort is required, and replacement costs increase. On the other hand, a split type rotor provided at relatively high initial costs can be easily replaced with a new fan-shaped piece by removing a bolt which fixes the fan-shaped piece. Accordingly, the replacement costs decrease.

In a case of the above-described integrated type adsorption rotor, a rotor element other than a top layer surface having no problem is also replaced, and wastefully used materials increase. In addition, since a weight of a replacement target increases, heavy machinery is required during replacement, thereby causing a problem in that the replacement costs increase.

In order to solve this problem, Patent Document 1 discloses a technique as follows. When the deterioration or the performance decline occurs in the adsorption rotor element, only a top layer surface of the adsorption rotor can be attached/detached.

### [Related art Document]

### [Patent Document]

[Patent Document 1] Japanese Patent No. 5826627

### [Summary of the Invention]

### [Problem that the Invention is to Solve]

In the adsorption rotor as disclosed in Patent Document 1, when the deterioration or the performance decline occurs in the adsorption rotor element, although it is not necessary to remove a portion having no problem in the adsorption rotor, there is a problem in that initial costs increase due to a complicated structure. In addition, a service person skilled for replacement work is required, and replacement effort is required. Consequently, there is another problem in that maintenance costs required for the replacement increase.

### [Means for solving the problem]

The present invention mainly aims to provide a cassette which can attach/detach an adsorption rotor in a short time with a relatively simple structure. When deterioration or performance decline occurs in an adsorption rotor element, a plurality of adsorption rotors are stacked in a width direction so that only the adsorption rotor in which the deterioration or the performance decline occurs can be attached/detached.

### [Advantage of the Invention]

The adsorption rotor and the cassette of the present invention have an advantage in that only the adsorption rotor in which the deterioration or the performance decline occurs can be attached/detached by changing structures of the rotor and cassette.

In addition, when only the adsorption rotor stacked in the width direction is attached/detached to be removable from a shaft, there is no need for a special tool. Even a person who is inexperienced in work can easily attach/detach the adsorption rotor. The rotor is split to reduce a weight of one rotor. Therefore, one person can hold the rotor, and one person can carry out replacement work. In this manner, a replacement time can be shortened, thereby leading to reduced maintenance costs.

### [Brief Description of the Drawings]

[Fig. 1] Fig. 1(A) is a sectional view of an adsorption rotor and a cassette of the present invention, and Fig. 1(B) is a view illustrating the cassette as a whole.
[Fig. 2] Fig. 2 is a photograph of a cut-out sample of a carbon dioxide adsorption rotor having a width of 400 mm, and is a view of an extracted portion of a segment sample.
[Fig. 3] Fig. 3 is a graph illustrating a distribution of a carbon dioxide adsorption amount for each extracted portion of the segment sample.
[Fig. 4] Fig. 4 is a graph in which dynamic performance of carbon dioxide adsorption and desorption for each operating time is compared with that of a rotor in the related art.
[Fig. 5] Fig. 5 is a flowchart of a device in which the dynamic performance of the carbon dioxide adsorption and desorption is measured.

### [Best Mode for Carrying Out the Invention]

The present invention adopts a cassette structure which can attach/detach only an adsorption rotor in which deterioration or performance decline occurs, when deterioration or performance decline occurs in a rotor element. In this manner, the present invention easily realizes an object in which attachable/detachable adsorption rotor and cassette can be provided without increasing initial costs and attachment/detachment costs.

### [Example 1]

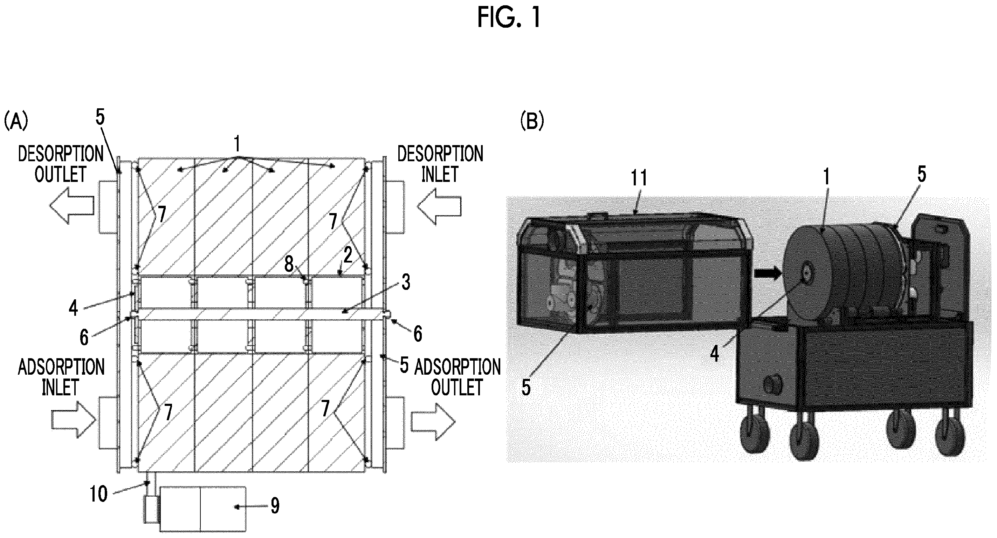

Fig. 1(A) is a sectional view of Example 1 of an adsorption rotor and a cassette of the present invention, and Fig. 1(B) is a view illustrating the cassette as a whole. This example adopts a cassette in which four adsorption rotors having a width of 100 mm and adsorbing carbon dioxide in air by using an ion exchange resin or an amine-supported solid absorbent are stacked in a width direction.

A reference numeral 1 represents a honeycomb rotor (adsorption rotor). A nonflammable sheet such as ceramic fiber paper is corrugated (formed into a wave shape), and is wrapped into a rotor shape. Therefore, a weakly basic ion exchange resin or the amine-supported solid absorbent is supported.

The respective honeycomb rotors 1 includes a boss 2, and are connected to each other by a shaft 3 passing through a central portion of the boss 2. In addition, each boss 2 is provided with a connection pin 8 and a hole into which the connection pin 8 is inserted. The connection pin 8 has a locking role so that each honeycomb rotor 1 is not separately rotated, even when one honeycomb rotor 1 is rotated by a motor 9 and a belt 10. In this manner, rotation speeds of the respective honeycomb rotors can be synchronized with each other.

The shaft 3 at the center is fixed to a chamber 5 with a nut 6 on an adsorption outlet (desorption inlet) side (right side in Fig. 1(A)). On an adsorption inlet side (left side in Fig/ 1(A)) of the shaft 3, each honeycomb rotor 1 is pinched between plates 4 made of a satisfactorily slidable member, and is fixed by being pressed down with the nut 6 from above the plate 4. The chamber 5 on the adsorption inlet side to which the shaft 3 is not attached (side to which the plate 4 is attached, through which the shaft 3 does not penetrate, and which is not fixed with the nut 6) is attached to a slide lid 11 of the cassette as illustrated in Fig. 1(B). The slide lid 11 is slid and closed in a direction indicated by an arrow so that the chamber 5 has a shape in which the honeycomb rotor 1 is pinched. In this example, the chamber 5 on the adsorption inlet side is attached to the slide lid 11 of the cassette, but the adsorption outlet side may be used in this way. Rubber 7 is provided in the chamber 5 to surround each zone so that adsorption gas and desorption gas do not leak. In this example, a rubber seal having a round cross section is used as the rubber 7. However, the present invention is not limited thereto, and a seal such as a fluorocarbon rubber sheet or a Teflon glass cloth may be used.

When a leakage from an outer periphery of a joining portion of each honeycomb rotor 1 becomes a problem, the leakage may be reduced by wrapping a rubber sheet or a resin sheet to cover each outer periphery joining portion or the entire outer periphery joining portion. In a circumferential direction of each honeycomb rotor 1, there are an adsorption zone through which adsorbed air passes and a desorption zone through which desorbed air passes, and an area ratio thereof is set to 1:1 in this example.

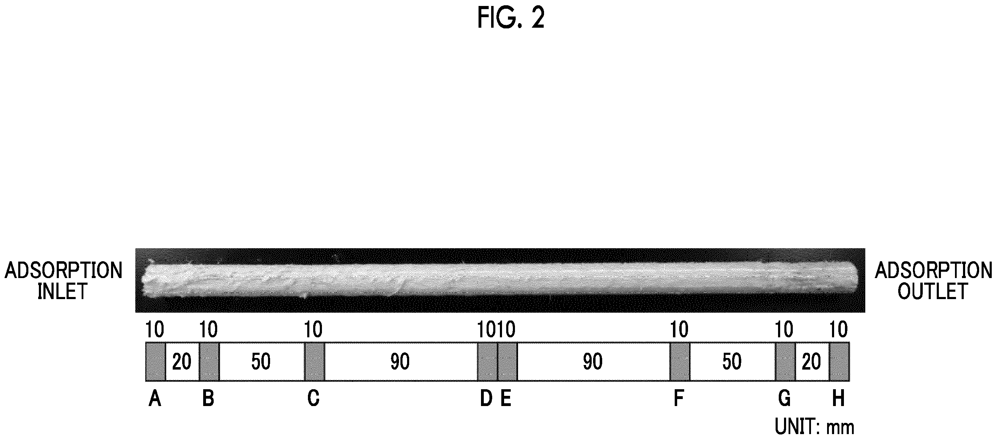

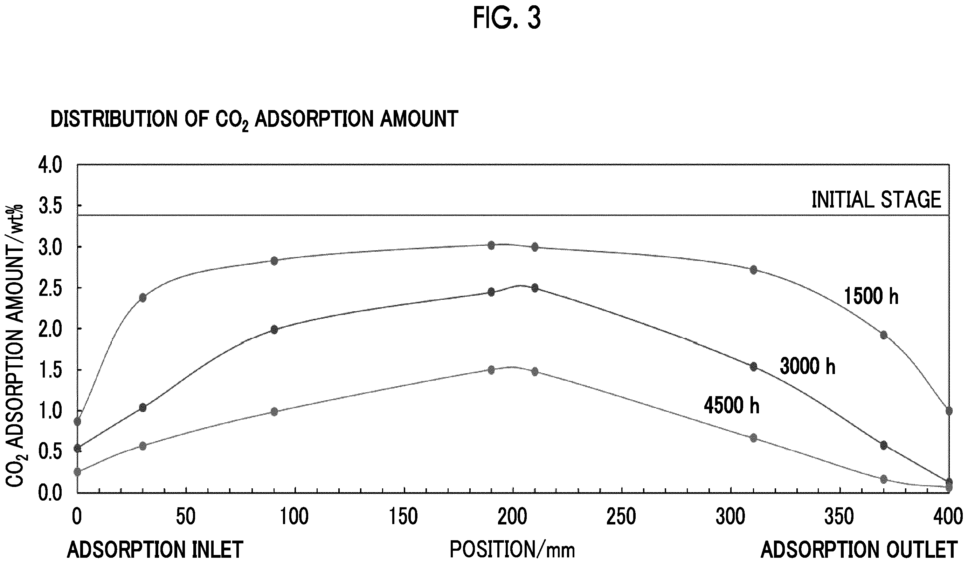

Fig. 2 is a photograph of a cut-out sample (width direction) of a carbon dioxide adsorption rotor having a width of 400 mm and operated for 4,500 hours, and is a view of an extracted portion of segment samples (A to H). In addition, Fig. 3 is a graph illustrating a distribution of a carbon dioxide adsorption amount for each extracted portion of the segment samples after operations for 1,500, 3,000, and 4,500 hours. Through test results, it is apparent that carbon dioxide adsorption performance significantly declines in both ends (adsorption inlet side and adsorption outlet side), compared to the center of the adsorption rotor.

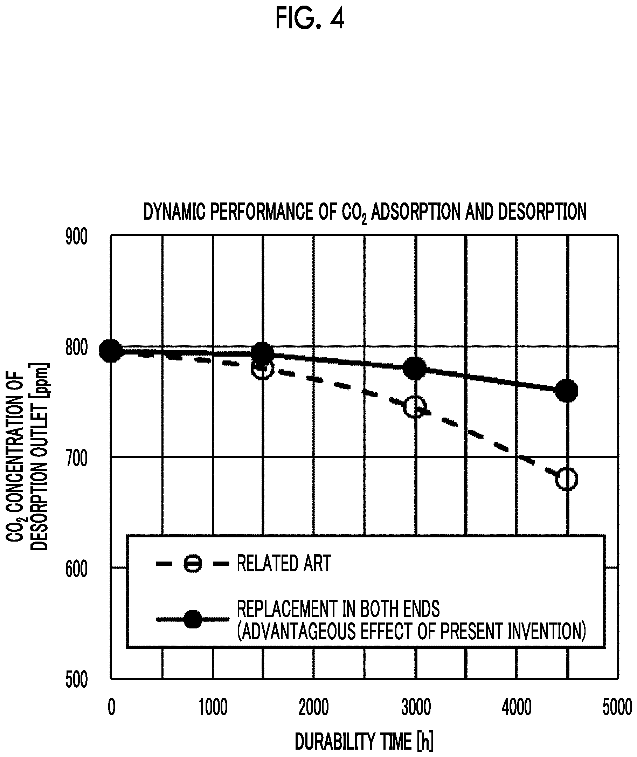

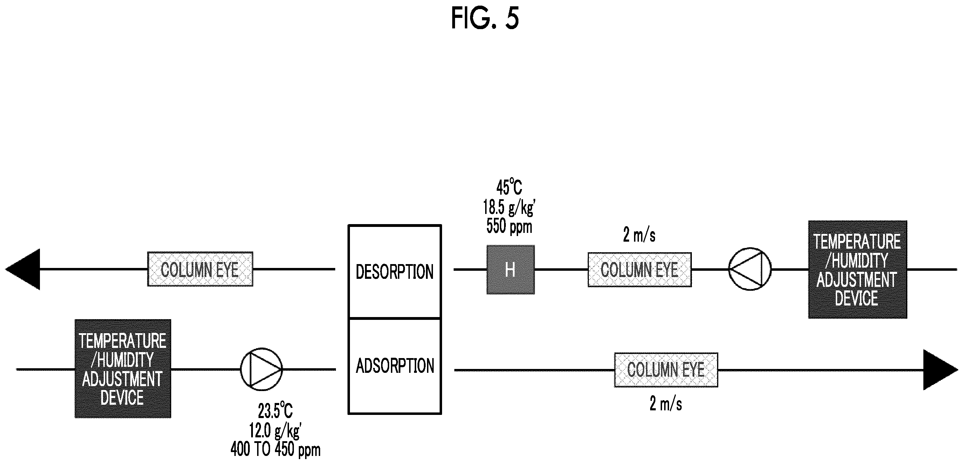

Fig. 4 illustrates a graph obtained by a heat mass transfer simulation of the honeycomb rotor, in which dynamic performance of carbon dioxide adsorption and desorption of the rotor whose both ends (adsorption inlet side and adsorption outlet side) are replaced in the present invention is compared with the rotor in the related art. In addition, Fig. 5 illustrates a device whose dynamic performance is measured. The air in an adsorption zone inlet (adsorption inlet side) is adjusted to have a temperature of 23.5°C, absolute humidity is 12.0 g/kg', and carbon dioxide concentration of 400 to 450 ppm, and the air in a desorption zone inlet (on the desorption inlet side) is adjusted to have a temperature of 45.0°C, absolute humidity of 18.5 g/kg', and carbon dioxide concentration to 550 ppm. It is confirmed that simulation results are approximately the same as test results of the rotor in the related art.

According to dynamic performance results illustrated in Fig. 4, the rotor in the related art maintains initial performance in which the carbon dioxide concentration in the desorption outlet is 800 ppm until a time after an operation for 1,500 hours. However, after an operation for 3,000 hours, the carbon dioxide concentration in the desorption outlet, that is, the dynamic performance of the carbon dioxide adsorption and desorption declines. However, the rotor of the present invention whose both ends are replaced in the present invention can relatively maintain the performance even after an operation for 4,500 hours. Through these results, it is understood that the performance can be maintained over a long period of time by replacing the rotor only in both ends when the dynamic performance of the rotor declines.

The number of honeycomb rotors 1 is not limited to four, and any number of the honeycomb rotors 1 can be installed as long as two or more honeycomb rotors can be installed. A rotor having a different width instead of the same width as that of the respective honeycomb rotors 1 may be used. Although an area ratio of the adsorption zone to the desorption zone is set to 1:1, the area ratio is not limited thereto, and other zones may be provided. In Example 1, although the honeycomb rotor in both ends on the adsorption inlet side and the adsorption outlet side is replaced, the honeycomb rotor at the center may be replaced, or only the honeycomb rotor that requires replacement may be replaced.

In this example, although the carbon dioxide adsorption rotor is used, the present invention is not limited thereto, and a solvent adsorption rotor or a moisture adsorption rotor may be used. As the adsorption rotor, a rotor having a different adsorbent or a rotor having a different supported amount may be used.

According to the present invention, even when deterioration or performance decline occurs in a replaceable adsorption rotor, it is possible to provide adsorption rotor and a cassette for accommodating the adsorption rotor, which can bring performance into a substantially new state by attaching/detaching only the adsorption rotor in which deterioration or performance decline occurs. In addition, when the adsorption rotor is attached/detached, there is no need for a special tool. Even a person who is inexperienced in work can easily attach/detach the adsorption rotor. Furthermore, the adsorption rotor is split to reduce a weight of one rotor. Therefore, one person can hold the rotor, and one person can carry out replacement work. In this manner, a replacement time can be shortened, thereby leading to reduced maintenance costs.

### [Description of Reference Numerals and Signs]

1 Honeycomb rotor
2 Boss
3 Shaft
4 Plate
5 Chamber
6 Nut
7 Rubber
8 Connection pin
9 Motor
10 Belt
11 Slide lid

## Claims

1. An adsorption rotor comprising:
two or more adsorption rotors coupled to a boss to be attachable/detachable in a width direction,
wherein a connection pin is provided in the boss, and
rotation speeds of the adsorption rotors are synchronized with each other.

2. A cassette comprising:
a chamber provided on an adsorption inlet side and an adsorption outlet side to connect the adsorption rotor according to Claim 1 in the width direction through a shaft,
wherein the adsorption rotor is fixed to the shaft with a nut and a plate.

3. The adsorption rotor according to Claim 1,
wherein in the adsorption rotor, an adsorbent whose performance declines is supported from both ends on the adsorption inlet side and the adsorption outlet side.

4. The adsorption rotor according to Claim 3,
wherein the adsorbent adsorbs carbon dioxide.

5. The adsorption rotor according to Claim 4,
wherein the adsorbent is an amine-based solid adsorbent.

6. The adsorption rotor according to Claim 1,
wherein in the adsorption rotor, only an adsorption rotor that needs to be replaced is replaced.
